# FASCICULE DE BREVET EUROPEEN

(11) **EP 2 310 314 B1**
(45) Date de publication et mention de la délivrance du brevet: **15.02.2012**
(21) Numéro de dépôt: 09740373.7
(22) Date de dépôt: 23.07.2009
(51) Int. Cl.: C01B 3/50, C01B 3/38, C01B 3/52, C01B 3/56, C01B 3/34

(54) **PROCÉDÉ ET APPAREIL DE GÉNÉRATION ET DE PURIFICATION DE GAZ DE SYNTHÈSE**
VERFAHREN UND VORRICHTUNG ZUR ERZEUGUNG UND REINIGUNG EINES SYNGASES
PROCESS AND APPARATUS FOR GENERATING AND PURIFYING A SYNGAS

(30) Priorité: 04.08.2008 FR 0855397
(43) Date de publication de la demande: 20.04.2011
(73) Titulaire: L'Air Liquide Société Anonyme pour l'Etude et l'Exploitation des Procédés Georges Claude, 75007 Paris (FR)
(72) Inventeur: HAIK-BERAUD, Natacha, F-94500 Champigny-sur-Marne (FR); HERNANDEZ, Antoine, F - 92290 Chatenay Malabry (FR); MARTY, Pascal, F-94360 Bry-sur-Marne (FR); POLSTER, Bernd, 60431 Frankfurt am Main (DE)
(74) Mandataire: Mercey, Fiona Susan
(86) Numéro de dépôt international: PCT/FR2009/051485
(87) Numéro de publication internationale: WO 2010/015767

(56) Documents cités:
- FR-A- 2 881 417
- US-A1- 2007 245 630

## Description

La présente invention est relative à un procédé de génération et purification de gaz de synthèse et à un appareil de génération et purification de gaz de synthèse.

Les unités de production de monoxyde de carbone et d'hydrogène peuvent être séparées en deux parties :
- ***génération du gaz de synthèse*** (mélange contenant H₂, CO, CH₄, CO₂, Ar, H₂O et N₂ essentiellement).
- ***purification du gaz de synthèse.*** On retrouve :
- une unité de lavage à un solvant liquide pour éliminer la plus grande partie des gaz acides contenue dans le gaz de synthèse
- une unité d'épuration sur lit d'adsorbants
- une unité de séparation par voie cryogénique dite boîte froide pour la production de CO.

Généralement, du carburant est consommé afin de préchauffer la charge, surchauffer de la vapeur qui peut être consommée par le procédé et/ou exportée.

La quantité de carburant nécessaire est généralement définie par les besoins de l'unité de génération du gaz de synthèse.

Le carburant étant constitué des gaz résiduaires des l'unité de séparation (telles quelles boite froide CO, PSA-H2, membranes, etc.) et généralement on souhaitera avoir un appoint de carburant extérieur pour assurer le contrôle du bilan carburant imposé par le procédé.

Dans le cas où la quantité de gaz résiduaires est plus importante que les besoins en carburant de l'unité, l'excédant peut être brulé dans une chaudière pour produire de la vapeur ou peut être exporté. Dans le cas de la production de vapeur, cela induit généralement l'investissement d'une chaudière dédiée.

L'invention propose de recycler le méthane résiduaire produit par l'unité de séparation cryogénique du gaz de synthèse comme charge de l'unité de production de gaz de synthèse afin de la valoriser différemment que comme carburant et ainsi réduire la quantité de carburant disponible et de réduire la consommation de la charge (en hydrocarbures). Ceci permet d'éviter l'investissement de la chaudière annexe (transformation de carburant excédentaire en vapeur). De plus la vapeur éventuellement produite dans la chaudière annexe ne peut pas toujours être valorisée.

US-A-2007/245 décrit un procédé selon le préambule de la revendication 1.

Selon un objet de l'invention, il est prévu un procédé de génération et de purification d'un gaz de synthèse dans lequel on génère un gaz de synthèse contenant de l'hydrogène, du monoxyde de carbone et du méthane dans une unité de génération alimentée par un gaz de charge et un carburant, on purifie le gaz de synthèse dans un appareil de séparation pour produire au moins un fluide enrichi soit en monoxyde de carbone soit en hydrogène et au moins un fluide enrichi en méthane, on pressurise le fluide enrichi en méthane après l'avoir mélangé à au moins un autre fluide du procédé et on envoie au moins une partie du mélange à l'unité de génération caractérisé en ce que l'au moins un autre fluide est le gaz de charge ou un gaz riche en hydrogène dérivé de l'appareil de séparation.

Optionnellement :
- on purifie le gaz de synthèse dans un appareil de séparation cryogénique, on pressurise le fluide enrichi en méthane en pompant un liquide enrichi en méthane de l'appareil de séparation cryogénique, on vaporise au moins une partie du liquide pompé et on l'envoie à l'unité de génération ;
- on mélange le fluide enrichi en méthane avec un autre fluide dérivé d'un appareil en aval de l'unité de génération pour produire un mélange gazeux, on comprime le mélange gazeux dans un compresseur et on envoie le mélange à l'unité de génération ;
- le gaz riche en hydrogène est produit par une unité d'adsorption alimentée par un fluide provenant de l'appareil de séparation cryogénique ;
- on mélange le fluide enrichi en méthane avec le gaz de charge de l'unité de génération pour produire un mélange gazeux, on comprime le mélange gazeux dans un compresseur et on envoie le mélange à l'unité de génération.

Selon un autre objet de l'invention, il est prévu un appareil de génération et de purification d'un gaz de synthèse comprenant une unité de génération alimentée par un gaz de charge et un carburant, un appareil de séparation pour produire au moins un fluide enrichi soit en monoxyde de carbone soit en hydrogène et au moins un fluide enrichi en méthane, des moyens pour envoyer un gaz de synthèse contenant de l'hydrogène, du monoxyde de carbone et du méthane de l'unité de génération à l'appareil de séparation, des moyens pour pressuriser un mélange constitué par le fluide enrichi en méthane et au moins un autre fluide de l'appareil et des moyens pour envoyer au moins une partie du mélange à l'unité de génération caractérisé en ce que les moyens pour pressuriser le mélange sont reliés à une arrivée de gaz de charge ou une arrivée de gaz riche en hydrogène dérivé de l'appareil de séparation..

Selon d'autres objets facultatifs :
- l'appareil de séparation est un appareil de séparation cryogénique, les moyens de pressurisation sont constitués par une pompe et comprenant des moyens pour vaporiser une partie du liquide pompé et pour l'envoyer à l'unité de génération et éventuellement des moyens pour envoyer une autre partie du liquide pompé à une colonne de l'appareil de séparation cryogénique ;
- l'appareil comprend un compresseur, des moyens pour envoyer le mélange gazeux au compresseur pour former un mélange gazeux comprimé et des moyens pour envoyer le mélange gazeux comprimé à l'unité de génération ;
- l'appareil comprend un compresseur, des moyens pour mélanger au moins une partie du gaz de charge avec le fluide enrichi en méthane pour former un mélange gazeux, des moyens pour envoyer le mélange gazeux dans le compresseur et des moyens pour envoyer le mélange gazeux comprimé à l'unité de génération ;
- les moyens pour pressuriser le mélange sont reliés à une arrivée de gaz riche en hydrogène dérivé de l'appareil de séparation ;
- l'appareil comprend des moyens pour prélever un gaz riche en hydrogène d'une colonne d'épuisement de l'appareil de séparation comme gaz riche en hydrogène ;
- l'appareil comprend des moyens pour épurer un gaz provenant de l'appareil de séparation pour fournir le gaz riche en hydrogène ;
- l'appareil comprend des moyens pour prélever le gaz riche en hydrogène ;
- l'appareil de séparation est un appareil de distillation cryogénique.

Les solutions pouvant permettre de recycler le méthane résiduel comme charge de l'unité de génération du gaz de synthèse sont diverses :
a) Recycle par pompes cryogéniques. Le méthane résiduel soutiré de la cuve de la colonne CO/CH₄ de la boite froide est pompé, puis vaporisé et réchauffé dans la ligne d'échange avant d'être recycle comme charge de l'unité de génération de gaz de synthèse. Ces pompes peuvent être des pompes dédiées au recycle ou bien communes avec les pompes servant au lavage au méthane.
b) Recycle par compresseur de CH₄. Le méthane résiduel soutiré à basse pression de la colonne CO/CH₄ de la boite froide est vaporisé et réchauffé dans la ligne d'échange puis comprimé par un compresseur dédié pour être recycler comme charge.
c) Recycle par compresseur commun avec le gaz de flash.
d) Recycle par compresseur commun avec le gaz riche en hydrogène à la sortie de la boite froide qui sert comme hydrogène d'hydrogénation du gaz naturel de charge. Dans ce cas le mélange est recyclé en amont de l'unité d'hydro désulfurisation.
e) Recycle par compresseur commun avec l'hydrogène pur sorti PSA qui sert comme hydrogène d'hydrogénation du gaz nature de charge. Dans ce cas le mélange est recyclé en amont de l'unité de hydro désulfurisation.
f) Recycle par compresseur commun avec le CO₂ produit par l'unité d'élimination de gaz acides.
g) Recycle par compresseur commun avec le gaz de charge (le CH₄ recycle pouvant être pompé avant d'être comprimé ou pas).
h) Combinaison des différentes solutions (ex. 3 et 6, 7 et 3, etc.).

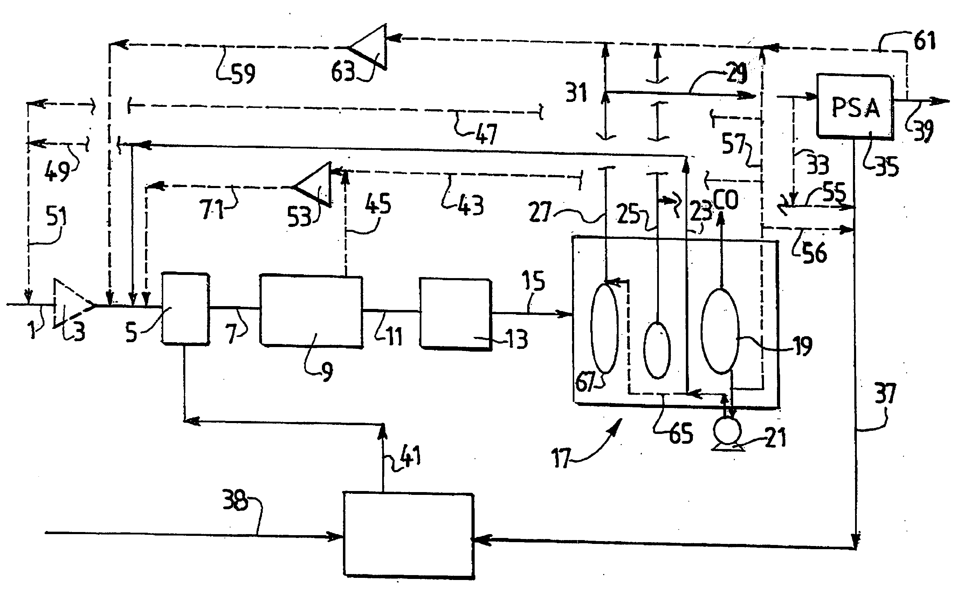

L'invention sera décrite en plus de détail en se référant à la Figure 1. Dans un souci de concision, cette figure montre un ensemble de solutions différentes couvertes par l'invention. L'usage d'une seule de ces solutions peut suffire.

Un débit de gaz de charge 1 est envoyé à une unité de génération 5 de gaz de synthèse 7, par exemple du type SMR, ATR etc, éventuellement après compression dans un compresseur 3. Cette unité est alimentée en carburant 41 dont une partie 38 peut provenir d'une source externe et une autre partie 37 peut provenir des traitements de gaz de synthèses en aval de l'unité de génération 5.

Le gaz de synthèse 7 est envoyé éventuellement à une unité d'élimination de gaz acides 9 qui peut produire un gaz riche en dioxyde de carbone 45. Le gaz de synthèse éventuellement épuré en gaz acides 11 est envoyé à des adsorbeurs 13 pour être séché et épuré et le gaz formé 15 sert d'alimentation à une unité de séparation par distillation cryogénique 17. L'unité de séparation 17 est montrée de manière très schématique mais peut être un appareil de lavage au méthane comprenant une colonne de lavage au méthane 67, une colonne d'épuisement et une colonne de séparation de CO/CH₄ 19. Un exemple d'un appareil de ce genre, mais utilisant seulement deux colonnes, est donné dans «Industrial Gas Handbook » de F. Kerry, page 238. Un liquide riche en méthane peut être soutiré de la cuve de la colonne 19, pressurisé dans une pompe 21 (qui peut être la pompe d'envoi de méthane 65 à la colonne de lavage au méthane 67), vaporisé pour former un débit de gaz 23 et soutiré de la boîte froide de l'appareil de séparation 17.

Ce débit 23 peut être recyclé à l'unité de génération 5 de diverses manières. Il peut être envoyé directement l'unité 5 sans compression. Sinon comme débit 49, il peut être mélangé au gaz de charge 1 et comprimé avec ce gaz dans le compresseur 3 d'alimentation de l'unité de génération 5.

Il est également possible de soutirer le liquide riche en méthane de cuve de la colonne 19, de le vaporiser sans l'avoir pressurisé et de le soutirer comme débit 55. Ce débit peut être mélangé avec un autre fluide pour former un mélange, le mélange étant comprimé dans un compresseur et envoyé à l'unité de génération 5 comme gaz d'alimentation. Par exemple le compresseur 63 comprime un mélange de gaz riche en méthane 55 et au moins un des gaz suivants : un gaz riche en hydrogène 25, 27, 31 provenant de l'appareil de séparation, en particulier de la colonne de lavage au méthane 67 et/ou de la colonne d'épuisement, un gaz riche en hydrogène produit par une unité d'adsorption 35 alimenté par un gaz 29 riche en hydrogène provenant de l'appareil de séparation 17. Le mélange 59 produit dans le compresseur 63 est recyclé en amont de l'unité de génération.

Une autre possibilité consiste à utiliser le compresseur 53 pour comprimer un mélange de gaz riche en méthane 43 et au moins un des gaz suivants : un gaz riche en dioxyde de carbone provenant de l'unité d'élimination de gaz acides. Le mélange formé 61 est envoyé à l'unité de génération 5 comme alimentation.

L'unité d'adsorption 35 de préférence de type PSA est alimenté par le gaz 29 provenant de l'unité de séparation 17 et produit un produit riche en hydrogène 39, éventuellement un gaz de recyclage 61 et éventuellement un gaz carburant 37 (éventuellement mélangé avec une partie 33 du gaz provenant de l'unité de séparation 17.

Il sera compris que pour les versions où le fluide riche en méthane est comprimé autrement que par une pompe, l'appareil de séparation 17 peut être une unité fonctionnant autrement que par distillation cryogénique, par exemple par perméation ou par adsorption.

En conclusion, le fluide riche en méthane peut être pressurisé :

## Revendications

1. Procédé de génération et de purification d'un gaz de synthèse dans lequel on génère un gaz de synthèse contenant de l'hydrogène, du monoxyde de carbone et du méthane dans une unité de génération (5) alimentée par un gaz de charge (1) et un carburant (41), on purifie le gaz de synthèse dans un appareil de séparation (17) pour produire au moins un fluide enrichi soit en monoxyde de carbone soit en hydrogène et au moins un fluide enrichi en méthane, on pressurise le fluide enrichi en méthane après l'avoir mélangé à au moins un autre fluide du procédé et on envoie au moins une partie du mélange à l'unité de génération **caractérisé en ce que** l'au moins un autre fluide est le gaz de charge ou un gaz riche en hydrogène dérivé de l'appareil de séparation (25, 27, 31,61,65).

2. Procédé selon la revendication 1 dans lequel on purifie le gaz de synthèse dans un appareil de séparation cryogénique (17), on pressurise le fluide enrichi en méthane en pompant un liquide enrichi en méthane de l'appareil de séparation cryogénique, on vaporise au moins une partie du liquide pompé et on l'envoie à l'unité de génération.

3. Procédé selon la revendication 1 dans lequel on mélange le fluide enrichi en méthane avec un autre fluide dérivé d'un appareil (9, 13, 17) en aval de l'unité de génération pour produire un mélange gazeux, on comprime le mélange gazeux dans un compresseur (53,63) et on envoie le mélange à l'unité de génération.

4. Procédé selon la revendication 3 dans lequel le gaz riche en hydrogène est produit par une unité d'adsorption (35) alimentée par un fluide provenant de l'appareil de séparation cryogénique.

5. Procédé selon les revendications 1 à 4 dans lequel on mélange le fluide enrichi en méthane avec le gaz de charge (1) de l'unité de génération pour produire un mélange gazeux, on comprime le mélange gazeux dans un compresseur (3) et on envoie le mélange à l'unité de génération.

6. Appareil de génération et de purification d'un gaz de synthèse comprenant une unité de génération (5) alimentée par un gaz de charge et un carburant, un appareil de séparation (17) pour produire au moins un fluide enrichi soit en monoxyde de carbone soit en hydrogène et au moins un fluide enrichi en méthane, des moyens pour envoyer un gaz de synthèse contenant de l'hydrogène, du monoxyde de carbone et du méthane de l'unité de génération à l'appareil de séparation, des moyens (3, 21, 53, 63) pour pressuriser un mélange constitué par le fluide enrichi en méthane et au moins un autre fluide de l'appareil et des moyens pour envoyer au moins une partie du mélange à l'unité de génération **caractérisé en ce que** les moyens pour pressuriser le mélange sont reliés à une arrivée de gaz de charge ou une arrivée de gaz riche en hydrogène dérivé de l'appareil de séparation..

7. Appareil selon la revendication 6 dans lequel l'appareil de séparation (17) est un appareil de séparation cryogénique, les moyens de pressurisation sont constitués par une pompe (21) et comprenant des moyens pour vaporiser une partie du liquide pompé et pour l'envoyer à l'unité de génération et éventuellement des moyens pour envoyer une autre partie du liquide pompé à une colonne de l'appareil de séparation cryogénique.

8. Appareil selon la revendication 6 comprenant un compresseur (63), des moyens pour envoyer le mélange gazeux au compresseur pour former un mélange gazeux comprimé et des moyens pour envoyer le mélange gazeux comprimé à l'unité de génération.

9. Appareil selon les revendications 6 à 8 comprenant un compresseur (3), des moyens pour mélanger au moins une partie du gaz de charge avec le fluide enrichi en méthane pour former un mélange gazeux, des moyens pour envoyer le mélange gazeux dans le compresseur et des moyens pour envoyer le mélange gazeux comprimé à l'unité de génération.

10. Appareil selon les revendications 6 à 9 dans lequel les moyens pour pressuriser le mélange sont reliés à une arrivée de gaz riche en hydrogène dérivé de l'appareil de séparation.

11. Appareil selon la revendication 10 comprenant des moyens pour prélever un gaz riche en hydrogène d'une colonne d'épuisement de l'appareil de séparation comme gaz riche en hydrogène.

12. Appareil selon la revendication 10 comprenant des moyens pour épurer un gaz provenant de l'appareil de séparation pour fournir le gaz riche en hydrogène.

13. Appareil selon la revendication 10 comprenant des moyens pour prélever le gaz riche en hydrogène.

14. Appareil selon l'une des revendications 6 à 13 dans lequel l'appareil de séparation est un appareil de distillation cryogénique (17).

## Claims

1. Method for generating and purifying a syngas, in which a syngas containing hydrogen, carbon monoxide and methane is generated in a generating unit (5) supplied with a feed gas (1) and a fuel (41), the syngas is purified in a separation apparatus (17) to produce at least one fluid enriched either with carbon monoxide or with hydrogen and at least one methane-enriched fluid, the methane-enriched fluid is pressurised after having been mixed with at least one other fluid of the method, and at least part of the mixture is sent to the generating unit, **characterised in that** the at least one other fluid is the feed gas or a hydrogen-rich gas derived from the separation apparatus (25, 27, 31, 61, 65).

2. Method according to claim 1, wherein the syngas is purified in a cryogenic separation apparatus (17), the methane-enriched fluid is pressurised by pumping a methane-enriched liquid from the cryogenic separation apparatus, at least part of the pumped liquid is vaporised and sent to the generating unit.

3. Method according to claim 1, wherein the methane-enriched fluid is mixed with another fluid derived from an apparatus (9, 13, 17) downstream of the generating unit to produce a gas mixture, the gas mixture is compressed in a compressor (63) and the mixture is sent to the generating unit.

4. Method according to claim 3, wherein the hydrogen-rich gas is produced by an adsorption unit (35) supplied with a fluid originating from the cryogenic separation apparatus.

5. Method according to claims 1 to 4, wherein the methane-enriched fluid is mixed with the feed gas (1) of the generating unit to produce a gas mixture, the gas mixture is compressed in a compressor (3) and the mixture is sent to the generating unit.

6. Apparatus for generating and purifying a syngas, comprising a generating unit (5) supplied with a feed gas and a fuel, a separation apparatus (17) for producing at least one fluid enriched either with carbon monoxide or with hydrogen and at least one methane-enriched fluid, means for sending a syngas containing hydrogen, carbon monoxide and methane from the generating unit to the separation apparatus, means (3, 63) for pressurising a mixture consisting of the methane-enriched fluid and at least one other fluid from the apparatus, and means for sending at least part of the mixture to the generating unit, **characterised in that** the mixture pressurising means are connected to an intake of feed gas or an intake of hydrogen-rich gas derived from the separation apparatus.

7. Apparatus according to claim 6, wherein the separation apparatus (17) is a cryogenic separation apparatus, the pressurising means consist of a pump (21) and comprising means for vaporising part of the pumped liquid and for sending it to the generating unit, and optionally means for sending another part of the pumped liquid to a column of the cryogenic separation apparatus.

8. Apparatus according to claim 6, comprising a compressor (63), means for sending the gas mixture to the compressor to form a compressed gas mixture, and means for sending the compressed gas mixture to the generating unit.

9. Apparatus according to claims 6 to 8, comprising a compressor (3), means for mixing at least part of the feed gas with the methane-enriched fluid to form a gas mixture, means for sending the gas mixture to the compressor, and means for sending the compressed gas mixture into the generating unit.

10. Apparatus according to claims 6 to 9, wherein the mixture pressurising means are connected to an intake of hydrogen-rich gas derived from the separation apparatus.

11. Apparatus according to claim 10, comprising means for removing a hydrogen-rich gas from a stripping column of the separation apparatus as hydrogen-rich gas.

12. Apparatus according to claim 10, comprising means for purifying a gas originating from the separation apparatus to supply the hydrogen-rich gas.

13. Apparatus according to claim 10, comprising means for removing the hydrogen-rich gas.

14. Apparatus according to any one of claims 6 to 13, wherein the separation apparatus is a cryogenic distillation apparatus (17).

## Patentansprüche

1. Verfahren zum Erzeugen und zum Reinigen eines Synthesegases, bei dem ein Synthesegas, das Wasserstoff, Kohlenmonoxid und Methan enthält, in einer Erzeugungseinheit (5), in die ein Einsatzgas (1) und ein Kraftstoff (41) geleitet werden, erzeugt wird, das Synthesegas in einer Trennungsvorrichtung (17) gereinigt wird, um mindestens ein Fluid herzustellen, das entweder mit Kohlenmonoxid oder mit Wasserstoff angereichert ist, und mindestens ein Fluid, das mit Methan angereichert ist, das Fluid, das mit Methan angereichert ist, unter Druck gesetzt wird, nachdem es mit mindestens einem weiteren Fluid des Verfahrens vermischt wurde, und mindestens ein Teil des Gemischs zur Erzeugungseinheit geleitet wird, **dadurch gekennzeichnet, dass** das mindestens eine weitere Fluid das Einsatzgas oder ein wasserstoffreiches Gas ist, das aus der Trennungsvorrichtung (25, 27, 31, 61, 65) stammt.

2. Verfahren nach Anspruch 1, wobei das Synthesegas in einer Vorrichtung (17) zur kryogenen Trennung gereinigt wird, das Fluid, das mit Methan angereichert ist, unter Druck gesetzt wird, indem eine Flüssigkeit, die mit Methan angereichert ist, aus der Vorrichtung zur kryogenen Trennung gepumpt wird, mindestens ein Teil der gepumpten Flüssigkeit verdampft wird und zur Erzeugungseinheit geleitet wird.

3. Verfahren nach Anspruch 1, wobei das Fluid, das mit Methan angereichert ist, mit einem weiteren Fluid, das aus einer Vorrichtung (9, 13, 17) nach der Erzeugungseinheit stammt, vermischt wird, um ein Gasgemisch herzustellen, das Gasgemisch in einem Kompressor (63) verdichtet wird und das Gemisch zur Erzeugungseinheit geleitet wird.

4. Verfahren nach Anspruch 3, wobei das wasserstoffreiche Gas von einer Adsorptionseinheit (35) produziert wird, in die ein Fluid geleitet wird, das aus der Vorrichtung zur kryogenen Trennung stammt.

5. Verfahren nach den Ansprüchen 1 bis 4, wobei das Fluid, das mit Methan angereichert ist, mit dem Einsatzgas (1) aus der Erzeugungseinheit vermischt wird, um ein Gasgemisch herzustellen, das Gasgemisch in einem Kompressor (3) verdichtet wird und das Gemisch zur Erzeugungseinheit geleitet wird.

6. Vorrichtung zum Erzeugen und Reinigen eines Synthesegases, umfassend eine Erzeugungseinheit (5), in die ein Einsatzgas und ein Kraftstoff geleitet werden, eine Trennungsvorrichtung (17) zur Herstellung mindestens eines Fluids, das entweder mit Kohlenmonoxid oder mit Wasserstoff angereichert ist, und mindestens eines Fluids, das mit Methan angereichert ist, Mittel zum Leiten eines Synthesegases, das Wasserstoff, Kohlenmonoxid und Methan enthält, aus der Erzeugungseinheit zur Trennungsvorrichtung, Mittel (3, 63) zum Unterdrucksetzen eines Gemischs, das aus dem Fluid, das mit Methan angereichert ist, und mindestens einem weiteren Fluid aus der Vorrichtung gebildet ist, und Mittel zum Leiten mindestens eines Teils des Gemischs zur Erzeugungseinheit, **dadurch gekennzeichnet, dass** die Mittel zum Unterdrucksetzen des Gemischs mit einer Zuleitung für Einsatzgas oder einer Zuleitung für das wasserstoffreiche Gas, das aus der Trennungsvorrichtung stammt, verbunden sind.

7. Vorrichtung nach Anspruch 6, wobei die Trennungsvorrichtung (17) eine Vorrichtung zur kryogenen Trennung ist, die Mittel zum Unterdrucksetzen von einer Pumpe (21) gebildet sind und umfassend Mittel zum Verdampfen eines Teils der gepumpten Flüssigkeit und zum Leiten zur Erzeugungseinheit und gegebenenfalls Mittel zum Leiten eines weiteren Teils der gepumpten Flüssigkeit zu einer Kolonne der Vorrichtung zur kryogenen Trennung.

8. Vorrichtung nach Anspruch 6, umfassend einen Kompressor (63), Mittel zum Leiten des Gasgemischs zum Kompressor, um ein verdichtetes Gasgemisch zu bilden, und Mittel zum Leiten des verdichteten Gasgemischs zur Erzeugungseinheit.

9. Vorrichtung nach den Ansprüchen 6 bis 8, umfassend einen Kompressor (3), Mittel zum Mischen mindestens eines Teils des Einsatzgases mit dem Fluid, das mit Methan angereichert ist, um ein Gasgemisch herzustellen, Mittel zum Leiten des Gasgemischs in den Kompressor, und Mittel zum Leiten des verdichteten Gasgemischs zur Erzeugungseinheit.

10. Vorrichtung nach den Ansprüchen 6 bis 9, wobei die Mittel zum Unterdrucksetzen des Gemischs mit einer Zuleitung für das wasserstoffreiche Gas, das aus der Trennungsvorrichtung stammt, verbunden sind.

11. Vorrichtung nach Anspruch 10, umfassend Mittel zum Entnehmen eines wasserstoffreichen Gases aus einer Strippkolonne der Trennungsvorrichtung als wasserstoffreiches Gas.

12. Vorrichtung nach Anspruch 10, umfassend Mittel zum Reinigen eines Gases, das aus der Trennungsvorrichtung stammt, um das wasserstoffreiche Gas bereitzustellen.

13. Vorrichtung nach Anspruch 10, umfassend Mittel zum Entnehmen des wasserstoffreichen Gases.

14. Vorrichtung nach einem der Ansprüche 6 bis 13, wobei die Trennungsvorrichtung eine Vorrichtung (17) zur kryogenen Destillation ist.
